# EUROPEAN PATENT APPLICATION

(11) **EP 2 778 834 A1**
(43) Date of publication of application: **17.09.2014**
(21) Application number: 13159489.7
(22) Date of filing: 15.03.2013
(51) Int. Cl.: G06F 1/26, G06F 3/033, G06F 3/0354

(54) **Active stylus low energy indication on a touch-sensitive display device**

(71) Applicant: BlackBerry Limited, Waterloo, ON N2K 0A7 (CA)
(72) Inventor: Kreek, Conrad A., Waterloo, Ontario N2L 3W8 (CA); Klassen, Gerhard Dietrich, Waterloo, Ontario N2L 3W8 (CA)
(74) Representative: Noble, Nicholas

(57) **Abstract**

A touch-sensitive display indicates a low energy storage level of an active stylus by changing a visual characteristic of a digital ink line segment defined by the active stylus and rendered on the touch-sensitive display. Adding additional energy to the active stylus restores the visual appearance of newly drawn digital ink to a user selected setting. Adding additional energy to the active stylus also restores the visual appearance of the digital ink displayed after determination that the active stylus had a low energy storage level.

## Description

### FIELD OF THE DISCLOSURE

The present disclosure generally relates to an electronic device with a touch-sensitive display and the use of such and electronic device with an active stylus.

### BACKGROUND

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart telephones, wireless personal digital assistants (PDAs), and laptop computers with wireless 802.11 or Bluetooth capabilities.

A touch-sensitive display, also known as a touchscreen display, is particularly useful on handheld devices including PDAs, smart phones and tablets, for example, which are small and have limited space for user input and output. The information renderred on the touch-sensitive display may be generated and modified with an active stylus depending on the functions and operations being performed.

Improvements in electronic devices with touch-sensitive displays are desirable.

### BRIEF DESCRIPTION OF THE DRAWINGS

The accompanying figures in which like reference numerals refer to identical or functionally similar elements throughout the separate views, and which together with the detailed description below are incorporated in and form part of the specification, serve to further illustrate various embodiments and to explain various principles and advantages in accordance with the present disclosure, in which:

FIG. 1 shows a block diagram of a system for providing an active stylus low energy indication on a touch-sensitive display device.

FIG. 2 shows a representative block diagram of an active stylus.

FIG. 3 shows a representative flow diagram of the operation of the active stylus.

FIG. 4 shows a representative flow diagram of the operation of the touch-sensitive display apparatus.

FIG. 5 shows an example of a user drawing a first line segment having a first visual characteristic on a touch-sensitive display device.

FIG. 6 shows a continuing example of the first line segment having the first visual characteristic and the user drawing a second line segment having a second visual characteristic on the touch-sensitive display device.

FIG. 7 shows a continuing example of the first line segment having the first visual characteristic, the second line segment having the second visual characteristic, and the user drawing a third line segment having the first visual characteristic on the touch-sensitive display device.
FIG. 8 shows a continuing example of the first line segment having the first visual characteristic, the second line segment having the first visual characteristic, and the third line segment having the first visual characteristic on the touch-sensitive display device.

### DETAILED DESCRIPTION

While detailed embodiments are disclosed herein, it is to be understood that the disclosed embodiments are merely examples and that the devices, systems and methods described herein can be embodied in various forms. Therefore, specific structural and functional details disclosed herein are not to be interpreted as limiting, but merely as a basis for the claims and as a representative basis for teaching one of ordinary skill in the art to variously employ the disclosed subject matter in virtually any appropriately detailed structure and function. Further, the terms and phrases used herein are not intended to be limiting, but rather, to provide an understandable description. Additionally, unless otherwise specifically expressed or clearly understood from the context of use, a term as used herein describes the singular or the plural of that term.

In one aspect, there is provided a method for determining a first transition of an energy storage level of an active stylus from a first level to a second level; and for modifying an appearance of a digital ink line segment defined by the active stylus in response to the determining.

In another aspect, there is provided an apparatus having a stylus sensor for determining a motion of an active stylus upon the apparatus and for receiving a status signal indicative of an energy storage level of the active stylus; a digital ink module for generating a digital ink line segment in response to the motion and for associating a first visual characteristic with a first portion of the digital ink line segment in response to the status signal indicating that the energy storage level of the active stylus has a first level and for associating a second visual characteristic with a second portion of the digital ink line segment in response to the status signal indicating that the energy storage level of the active stylus has transitioned from the first level to a second level; and a display for rendering the first portion of the digital ink line segment with the first visual characteristic and for rendering the second portion of the digital ink line segment with the second visual characteristic.

In another aspect, there is provided a system having an active stylus and a touch-sensitive display device. The active stylus having an energy storage module for powering the active stylus; a controller for determining a status indicative of an energy storage level of the energy storage module; an RF module for transmitting the status signal indicative of the energy storage level of the energy storage module and for transmitting a beacon signal indicative of a location of the active stylus; and an energy harvesting module for harvesting motion energy imparted to the stylus and adding energy to the energy storage module. The touch-sensitive display device having a stylus sensor for receiving the beacon signal and for determining a motion of the active stylus upon touch-sensitive display device in response to the beacon signal and for receiving the status signal indicative of the energy storage level of the active stylus; a digital ink module for generating a digital ink line segment in response to the motion and for associating a first visual characteristic with a first portion of the digital ink line segment in response to the status signal indicating that the energy storage level of the active stylus has a first level and for associating a second visual characteristic with a second portion of the digital ink line segment in response to the status signal indicating that the energy storage level of the active stylus has transitioned from the first level to a second level, the second level corresponding to a low energy storage level and the first level being greater than the second level; and a display for rendering the first portion of the digital ink line segment with the first visual characteristic and for rendering the second portion of the digital ink line segment with the second visual characteristic, the digital ink module further for disassociating the second visual characteristic from the second portion of the digital ink line segment and associating the first visual characteristic with the second portion of the digital ink line segment in response to the status signal indicating that the energy storage level of the active stylus has transitioned from the second level to the first level, and the display further for rerendering the second portion of the digital ink line segment with the first visual characteristic.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-know methods, procedures, and components have not been described in detail to avoid obscuring the embodiments described. The description is not to be considered as limited to the scope of the embodiments described herein.

The disclosure generally relates to an electronic device having a touch-sensitive display and an active stylus, which is a portable electronic device in the embodiments described herein. Examples of the electronic device includes a Personal Information Manager (PIM), Personal Digital Assistant (PDA), a pager, a mobile phone, a cellular phone, a smart-phone, a super-phone, a tablet computer, and a laptop. The electronic device may also be a portable electronic device without wireless communication capabilities, such as a handheld electronic game device, digital photograph album, digital camera, or other device. Furthermore, the electronic device need not be portable and may be a stationary unit such as a Personal Computer (PC) or a workstation.

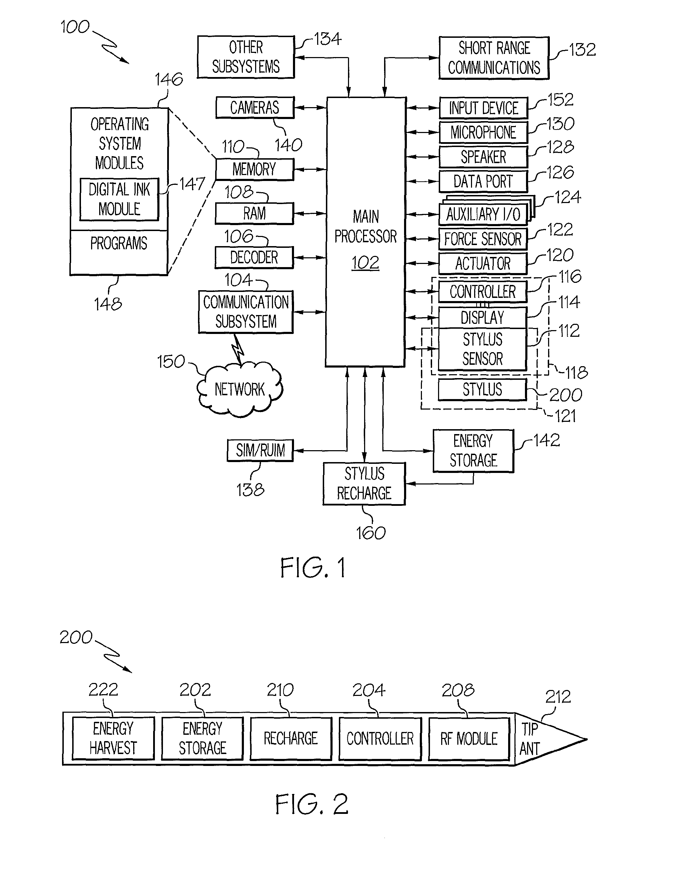

FIG. 1 shows a block diagram a system for providing an active stylus low energy indication on a touch-sensitive display device. The system includes a touch-sensitive display device **100** and an active stylus **200.** The touch-sensitive display device **100** includes multiple components, such as a processor **102** that controls the overall operation of the touch-sensitive display device **100.** Communication functions, including data and voice communications, are performed through a communication subsystem **104.** Data received by the touch-sensitive display device **100** is decompressed and decrypted by a decoder **106.** The communication subsystem **104** receives messages from and sends messages to a wireless network **150.** The wireless network **150** may be any type of wireless network, including, but not limited to, data wireless networks, voice wireless networks, and networks that support both voice and data communications. Energy storage module **142** includes one or more rechargeable batteries, super capacitors, or a port to an external power supply for powering the touch-sensitive display device **100.**

The processor **102** interacts with other components, such as Random Access Memory (RAM) **108** and memory **110.** The processor **102** also interacts a display **114,** a stylus sensor **112** including a touch-sensitive overlay operably connected to an controller **116** that together comprise a touch-sensitive display **118.** The processor **102** also interacts with an auxiliary input/output (I/O) subsystem **124,** a data port **126,** a speaker **128,** a microphone **130,** short-range communications **132,** and other subsystem **134** which may include other device subsystems. Stylus sensor **112** and active stylus form a stylus sensor system **121** which is also able to interface with the touch-sensitive overlay of the stylus sensor **112.** The processor **102** may optionally interact with one or more actuators **120** to provide tactile feedback and one or more force sensors **122** to detect a force imparted on the touch-sensitive display **118.** Interaction with a graphical user interface is performed through the stylus sensor **112.** The processor **102** interacts with the stylus sensor **112** via the controller **116.** Information, such as objects including text, characters, symbols, images, icons, digital ink line segments defined by the active stylus, and other items that may be displayed or rendered on a portable electronic device, is rendered on the touch-sensitive display **118** via the processor **102.** The processor **102** may interact with an orientation sensor **136** such as an accelerometer that may be utilized to detect a direction of gravitational forces or gravity-induced reaction forces. The processor **102** may interact with camera module **140** which may include one or more forward and/or rear facing cameras for photography, video conferencing or for optical recognition of gestures and objects such, as a stylus, for user interface operations.

To identify a subscriber for network access, the touch-sensitive display device **100** uses a Subscriber Identity Module or a Removable User Identity Module (SIM/RUIM) card **138** for communication with a network, such as the wireless network **150.** Alternatively, user identification information may be programmed into memory **110.**

The touch-sensitive display device **100** includes an operating system **146** including instructions for implementing at least portions of digital ink module **147,** and software components or programs **148** that are executed by the processor **102** and are typically stored in a persistent, updatable store such as the memory **110.** Memory **110** receives content from a computer readable medium comprising computer instructions executable on at least one processing unit. Additional applications or programs may be loaded onto the touch-sensitive display device **100** through the wireless network **150,** the auxiliary I/O subsystem **124,** the data port **126,** the short-range communications **132,** or any suitable other subsystem **134.**

A received signal such as a text message, an e-mail message, or web page download is processed by the communication subsystem **104** and input to the processor **102.** The processor **102** processes the received signal for output to the display **114** and/or to the auxiliary I/O subsystem **124.** A subscriber may generate data items, for example e-mail messages, which may be transmitted over the wireless network **150** through the communication subsystem **104.** For voice communications, the overall operation of the touch-sensitive display device **100** is similar. The speaker **128** outputs audible information converted from electrical signals, and the microphone **130** converts audible information into electrical signals for processing.

The touch-sensitive display **118** may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display may include a capacitive touch-sensitive overlay within stylus sensor **112.** The stylus sensor **112** may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

In one implementation, stylus sensor **112** employs touch-sensitive display **118** having a planar upper surface for supporting work sheets, e.g., rendered objects including drawings, charts, maps or the like. The touch-sensitive display **118** also has a generally planar grid of conductors underneath the work surface.

The conductor grid is composed typically of a plurality of straight, parallel, usually equi-spaced conductors extending in a horizontal or x-direction, and a plurality of straight, parallel, usually equi-spaced conductors extending in a vertical or y-direction. The stylus typically has an elongated, cylindrical body terminating in a conical tip. Near the tip, the stylus contains an antenna or an electrical coil disposed concentrically with the central axis of the stylus body.

Determination of stylus location and angle of tilt is known to those familiar with the art. In one implementation, the active stylus wirelessly transmits electrical signals including a beacon signal that may be analyzed to determine a location and orientation of the active stylus. The electrical signals are received by the grid conductors of the stylus sensor. Then, the grid conductors are scanned by detection circuitry to yield a series of voltage waveforms of various amplitudes corresponding to the location of the conductors with respect to the stylus. The voltage waveforms obtained from the conductors are analyzed to obtain a calculation of the position of the stylus tip on the upper surface of touch-sensitive display **118.** The stylus tilt of the active stylus may also be determined with further waveform analysis. The voltage waveform typically has a pair of spaced characteristic peaks whose magnitudes correspond to pen tilt. In one implementation, the stylus tilt of the stylus is determined by analyzing either the peaks or the magnitudes of the waveform at "points" (i.e., voltages corresponding to specific conductors, or, simply stated, conductor voltages) at fixed distances on either side of the apparent pen position, and inside the waveform peaks. The antenna or coil at the tip of the stylus may further have an asymmetrical wireless radiation pattern to help facilitate determination of the stylus tilt.

Furthermore, the active stylus may also sense the stylus contact pressure exerted by the user of the stylus when using the stylus to contact the touch-sensitive display and then transmit a stylus pressure signal included within its transmitted signals. The stylus may also have at least one button activated by a button press by the user and the status of the button may also be included within the transmitted signals.

One or more touches, also known as touch contacts or touch events, may be detected by the touch-sensitive display **118.** The processor **102** may determine attributes of the touch, including a location of a touch. Touch location data may include an area of contact or a single point of contact, such as a point at or near a center of the area of contact. The location of a detected touch may include x and y components, e.g., horizontal and vertical components, respectively, with respect to one's view of the touch-sensitive display **118.** For example, the x location component may be determined by a signal generated from one touch sensor, and the y location component may be determined by a signal generated from another touch sensor. A signal is provided to the controller **116** in response to detection of a touch. A touch may be detected from any suitable object, such as a stylus, finger, thumb, appendage, or other items, depending on the nature of the touch-sensitive display **118.** Multiple simultaneous touches may be detected.

The touch-sensitive display **118** is also configured to detect a gesture. A gesture, such as a swipe, is a type of touch that begins at an origin point and continues to a finishing point while touch contact is maintained. A swipe may be long or short in distance, or duration, or both distance and duration. Two points of the swipe may be utilized to determine a vector that describes a direction of the swipe. The duration of the swipe may be determined from the origin point and finishing point of the swipe in time. The processor **102** receives data from the controller **116** to determine the direction, magnitude, and duration of the swipe. The gesture may be tracked and a plurality of sub-vectors determined for each gesture. The final sub-vector may be utilized to determine a distance and duration of a final portion of the gesture. The processor **102** receives data from the controller **116** to determine the speed of the swipe based on the distance and duration of the final portion of the gesture.

Actuators **120** may be disposed beneath the touch-sensitive display **118** and may be depressed or activated by applying force to overcome the actuation force of the actuator **120.** The actuators **120** may provide input to the processor **102** when actuated. Actuation of the actuator(s) **120** may result in provision of tactile feedback. Force sensors **122** may work in combination with the actuators to measure an applied force. Force generally refers to force measurements, estimates, and/or calculations, such as pressure, deformation, stress, strain, force density, force-area relationships, thrust, torque, and other effects that include force or related quantities.

Those familiar with the art will appreciate that there are numerous ways to determine stylus location, tilt and pressure that realize the function of stylus sensor system **121.** For example, stylus location and tilt can be determined by optical triangulation with a pair of cameras **140** monitoring one or more fiducials of the stylus, or sonic, ultrasonic audio or radio frequency triangulation using time-of-flight signaling and triangulation. These approaches can be performed with either an active or a passive stylus. Stylus pressure can be sensed in a number of ways including the use of force sensor **122.** The stylus tilt of the stylus may also be determined by an accelerometer or gyro included within the stylus. Further, the tilt of the touch-sensitive display can be determined with an accelerometer or gyro associated with the touch-sensitive display. The stylus tilt of the stylus relative to the touch-sensitive display can be calculated by comparing the stylus and touch-sensitive display tilt angles.

Also included is a stylus recharge module **160** that manages recharging of the active stylus **200** when coupled to the touch-sensitive display device **100.** In one implementation the stylus recharge module **160** transfers energy from energy storage module **142** to the active stylus **200.**

FIG. 2 shows a representative block diagram of an active stylus. Active stylus **200** has an energy storage module **202,** which may include a battery, super capacitor or other energy storage device, for powering the operation of the active stylus. Controller **204** monitors any input button (not shown) received on one or more buttons of the stylus operable by a user, and a pressure sensor (not shown) to activate the operation of the RF module **208.** When a slight pressure on the tip **212** of the stylus is detected, the controller powers on the RF module which transmits RF signals trough an antenna at least partially included at tip **212.** The RF signals includes a beacon signal that allows for determination of stylus contact location on the touch-sensitive display **118** as well as a stylus tilt of the stylus relative to the touch-sensitive display. Within the RF signals, the controller can include additional signals for processing by touch-sensitive display device **100** including a status signal indicative of the energy storage level of the energy storage module **202.** The status signal could be a representation of the amount of energy left in the energy storage module (a signal ranging from 100% to 0% for example), or could indicate whether or not the amount of energy left in the energy storage module is low, (below 10% for example). In one example, below 10% would be a low energy level and 10% or above would not be a low energy level. When the energy level drops from 10% or above to below 10% indicates that the energy storage level of the active stylus has transitioned from a first level to a second level. The determination of this first transition may be made by the active stylus controller **204** monitoring the energy storage module **202** or by the touch-sensitive display device **100** receiving a status signal from the active stylus **200** indicative of the energy level of the active stylus and determining the transition at touch-sensitive display processor **102.**

Energy storage module **202** provides operating power for electrical components of the active stylus **200,** including the controller **204** and RF module **208.** Thus, energy is reduced from the energy storage module when the active stylus is in use, thereby reducing the energy storage level of the active stylus while defining the digital ink line segment. Recharge module **210** is an optional module that provides for the reception of energy from the stylus recharge module **160** and the increase of energy stored in the energy storage module **202.** Optional energy harvest module **222** provides for the harvesting of motion energy imparted to the stylus and increasing the energy stored in the energy storage module. For example, a user may impart an external source of energy for the active stylus by providing a shaking action of the active stylus. Energy harvesting systems are known to those familiar with the art and include a weight coupled a piezoelectric element for converting motion energy imparted to the active stylus into electrical energy for recharging the energy storage module or a magnet moving in relation to an inductor for converting motion energy imparted to the active stylus into electrical energy for recharging the energy storage module.

In continuing with the above example, as additional energy is received and added to energy storage module **202,** the energy level rises from below 10% to 10% or above indicating that the energy storage level of the active stylus has transitioned from the second level to back to the first level. The determination of this second transition may be made by the active stylus controller **204** monitoring the energy storage module **202** or by the touch-sensitive display device **100** receiving a status signal from the active stylus **200** indicative of the energy level of the active stylus and determining the transition at touch-sensitive display processor **102.**

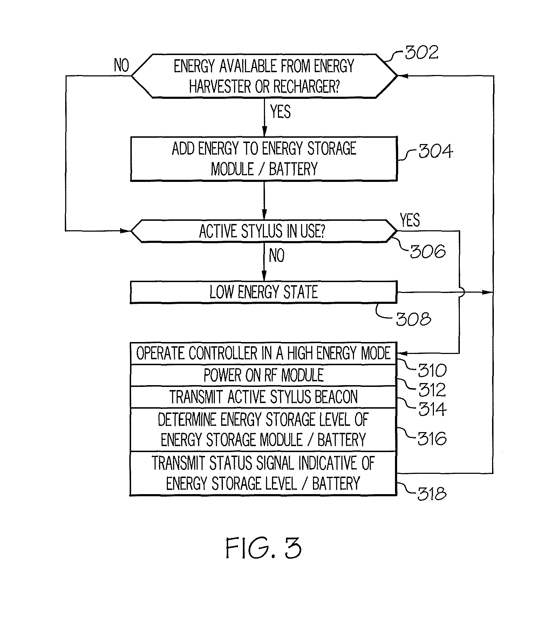

FIG. 3 shows a representative flow diagram of the operation of the active stylus. Step **302** determines if energy is available from either the energy harvesting module **222** or the recharge module **210.** If so, step **304** adds energy to the energy storage module **202.** If the energy storage module includes a battery, then the battery is recharged at step **304.** Then step **306** determines if the active stylus is in use. This may be done by sensing stylus pressure or stylus motion or other approaches known to those familiar with the art. If the active stylus is not in use, then step **308** assures the active stylus is in a low energy state to conserve energy stored in energy storage module **202.** Otherwise, step **310** operates the active stylus in a higher energy mode. The RF module **208** is powered on at step **312** and the active stylus beacon signal is transmitted at step **314.** Step **316** determines the energy storage level of the energy storage module **202** and the corresponding status signal indicative of the energy storage level or the battery state of charge is transmitted at step **318.** Thereafter the flow diagram returns to step **302.**

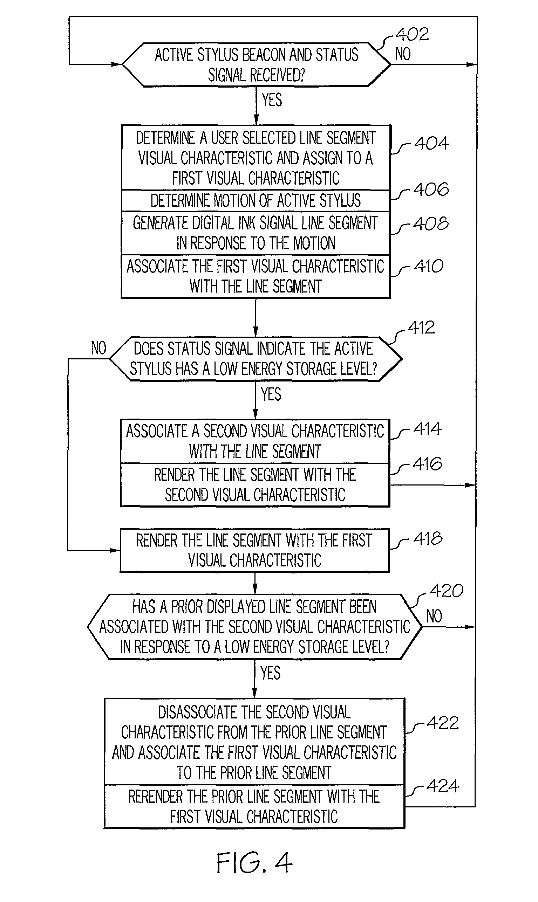

FIG. 4 shows a representative flow diagram of the operation of the touch-sensitive display apparatus. Step **402** determines if an active stylus beacon signal and a status signal have been received from the active stylus. If so, step **404** determines a user selected line segment visual characteristic and assigns it to a first visual characteristic. As is known to those familiar with the use of touch-sensitive displays, a wide verity of user selectable digital ink line segment visual characteristics are possible including line thiclcness or weight, line color, line dashes that provide for a discontinuous looking line. Step **406** determines the motion of the active stylus so that a digital ink line segment can be generated in response to the motion at step **408.** Digital ink line segments can be any of number of different type line segments know to those familiar with the art including alpha-numeric characters, drawings, curves, shapes including straight lines, rectangles, triangles, circles and symbols, and of course free-hand lines. Step **410** associates the first visual characteristic with the line segment.

Step **412** determines if the status signal indicates the active stylus has a low energy storage level. If so, then step **414** associates a second visual characteristic with the line segment and the line segment is rendered with the second visual characteristic instead of the user selected first visual characteristic at step **416.** The second visual characteristic may indicate to a user that the active stylus is running low on energy. For example, the second characteristic may reduce the thickness or line weight, or change the color, or change from a continuous line to a discontinuous dashed line in response to a transition to a low energy storage level. Thus, the first visual characteristic includes a user selected visual characteristic and the second visual characteristic, while it may be generated or derived from the first visual characteristic by the touch-sensitive display device, it appears different from the first visual characteristic and is generated without additional user input by the processes in digital ink module **147.** For example a user selected continuous red line turns into a dashed red line in response to a low energy level, the red being user selected and the dash generated automatically by the touch-sensitive display device in response to the low energy storage level.

If at step **412,** the status signal does not indicate that the active stylus has a low energy level, then step **418** renders the line segment with the first visual characteristic displayed by the user. Thereafter, step **420** determines if a prior line segment has been associated with the second visual characteristic in response to a low energy storage level. If so, the active stylus has received additional energy from an external source and step **422** disassociates the second visual characteristic from the prior line segment and associates the first visual characteristic to the prior line segment. Then step **424** rerenders the prior line segment with the first user selected visual characteristic, thereby removing the appearance of any active stylus low energy level indicia from the line segment.

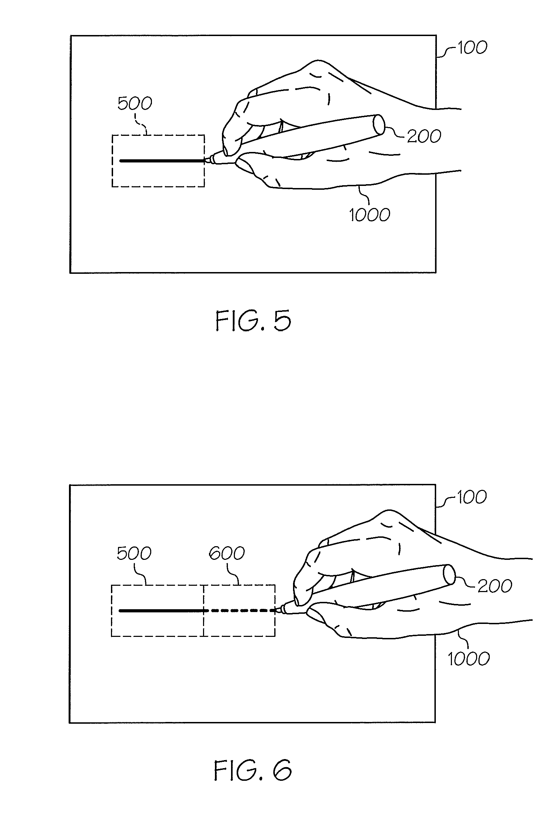

FIG. 5 shows an example of a user drawing a first line segment having a first visual characteristic on a touch-sensitive display device. A first line segment **500** is being drawn by a user **1000** using active stylus **200** on a touch-sensitive display device **100.** Line segment **500** is a straight continuous black line having a thickness or a heavy weight.

FIG. 6 shows a continuing example of the first line segment having the first visual characteristic and the user drawing a second line segment having a second visual characteristic on the touch-sensitive display device. A second line segment **600** is being drawn by user **1000** using active stylus **200** on the touch-sensitive display device **100.** Line segment **600** is a continuation of straight continuous line segment **500.** However, the active stylus energy storage module was determined to have a low energy level at the transition between line segment **500** and line segment **600.** In response, line segment **600** has a different visual characteristic in that it is a discontinuous line segment and appears as a straight dashed line. It will be appreciated that the low energy level of the active stylus can be communicated to the user through any of a number of alternate changes to the visual characteristic of the second line segment **600,** including a change in color to red for example or a fifty percent reduction in thickness or weight. The change in the visual characteristic of line segment **600** allows for an efficient way to communicate the active stylus energy status, without requiring a separate icon to be rendered on the touch-sensitive display, thereby occupying display space on the display, or without requiring an visual or audio enunciator on the active stylus, thereby increasing the cost and complexity of the active stylus.

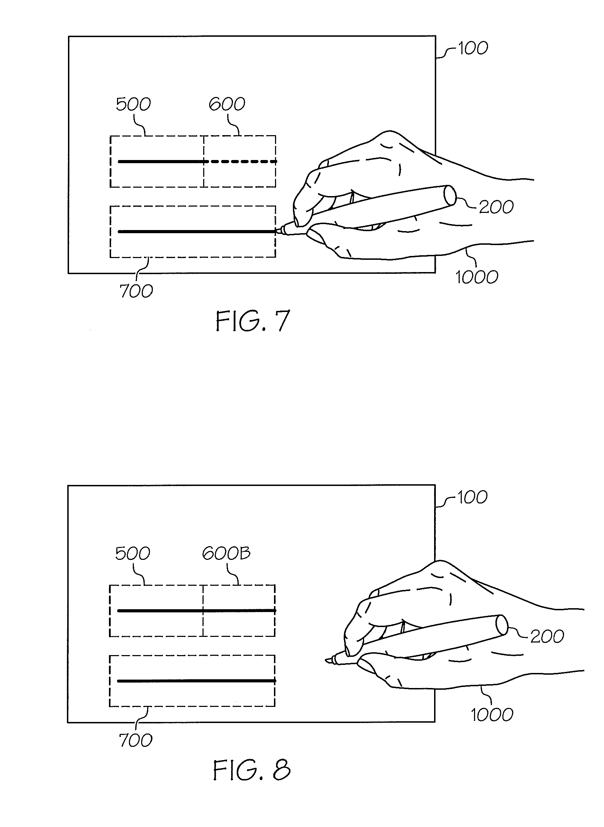

FIG. 7 shows a continuing example of the first line segment having the first visual characteristic, the second line segment having the second visual characteristic, and the user drawing a third line segment having the first visual characteristic on the touch-sensitive display device. The third line segment **700** is being drawn by user **1000** using active stylus **200** on the touch-sensitive display device **100.** In between the drawing of line segment **600** and line segment **700,** additional energy has been added to the energy storage module **202** of the active stylus. This may be done by coupling the active stylus **200** to the touch-sensitive display device **100** and adding energy through recharge module **210,** or by shaking the active stylus and harvesting the energy through energy harvesting module **222.** Both approaches are analogous to the familiar operation of using a traditional ink pen and paper. When ink runs low on an ink pen, the line quality on the paper degrades, a similar affect is shown between line segments **500** and **600.** The use of recharge module **210** is analogous to placing a fountain pen in an ink well to accumulate more ink. The use of energy harvesting module **222** is analogous to shaking an ink pen to deliver more ink to the tip. Once either of these approaches is performed, the system operates in a user selected mode as shown in line segment **700.**

FIG. 8 shows a continuing example of the first line segment having the first visual characteristic, the second line segment having the first visual characteristic, and the third line segment having the first visual characteristic on the touch-sensitive display device. FIG. 8 shows that after additional energy is added to the active stylus, the visual characteristic of line segment **600B** is modified to the user selected first visual characteristic, thereby correcting any appearance modifications resulting from a low energy level of the active stylus. To achieve this result using the analogous ink pen and paper example, a user would have to very accurately retrace line segment **600** after adding additional ink to the pen to achieve the appearance of not having run low on ink. This is likely an imperfect process because of the difficulties of accurately retracing line segment **600.** However, the touch-sensitive display apparatus automatically disassociates the visual characteristics of line segment **600B** and associates the user selected visual characteristics with line segment **600** in response to an increase in the stored energy of the active stylus.

It will also be appreciated that in another implementation, the visual appearance of line segment **600B** could have been changed to the first visual characteristic as soon as touch-sensitive display device **100** received the status signal indicating the active stylus had an energy level greater than the low energy level. In this implementation the second line segment appearance would change from that of **600** to that of **600B** even before the display of line segment **700.**

The terms "a" or "an", as used herein, are defined as one as or more than one. The term "plurality", as used herein, is defined as two as or more than two. The term "another", as used herein, is defined as at least a second or more. The terms "including" and "having," as used herein, are defined as comprising (i.e., open language). The term "coupled," as used herein, is defined as "connected," although not necessarily directly, and not necessarily mechanically. "Communicatively coupled" refers to coupling of components such that these components are able to communicate with one another through, for example, wired, wireless or other communications media. The term "communicatively coupled" or "communicatively coupling" includes, but is not limited to, communicating electronic control signals by which one element may direct or control another. The term "configured to" describes hardware, software or a combination of hardware and software that is adapted to, set up, arranged, commanded, altered, modified, built, composed, constructed, designed, or that has any combination of these characteristics to carry out a given function. The term "adapted to" describes hardware, software or a combination of hardware and software that is capable of, able to accommodate, to make, or that is suitable to carry out a given function.

The terms "controller", "computer", "server", "client", "computer system", "computing system", "personal computing system", or "processing system" describe examples of a suitably configured processing system adapted to implement one or more embodiments of the present disclosure. Any suitably configured processing system is similarly able to be used by embodiments of the present disclosure, for example and not for limitation, a personal computer, a laptop computer, a tablet computer, a personal digital assistant, a workstation, or the like. A processing system may include one or more processing systems or processors. A processing system can be realized in a centralized fashion in one processing system or in a distributed fashion where different elements are spread across several interconnected processing systems.

The terms "computing system", "computer system", and "personal computing system", describe a processing system that includes a user interface and which is suitably configured and adapted to implement one or more embodiments of the present disclosure. The terms "network", "computer network", "computing network", and "communication network", describe examples of a collection of computers and devices interconnected by communications channels that facilitate communications among users and allows users to share resources.

The term "electronic device" is intended to broadly cover many different types of electronic devices used by persons, and that include a user interface that can interoperate with a user. For example, and not for any limitation, an electronic device can include any one or a combination of the following: a two-way radio, a cellular telephone, a mobile phone, a smartphone, a two-way pager, a wireless messaging device, a personal computer, a laptop personal computer, a tablet computer, a gaming unit, a personal digital assistant, and other similar electronic devices.

Although specific embodiments of the subject matter have been disclosed, those having ordinary skill in the art will understand that changes can be made to the specific embodiments without departing from the spirit and scope of the disclosed subject matter. The scope of the disclosure is not to be restricted, therefore, to the specific embodiments, and it is intended that the appended claims cover any and all such applications, modifications, and embodiments within the scope of the present disclosure.

## Claims

1. A method comprising:
determining a first transition of an energy storage level of an active stylus from a first level to a second level (412); and
modifying a rendering of a digital ink line segment defined by the active stylus in response to the determining (414).

2. The method according to claim 1 wherein the second level corresponds to a low energy storage level and the first level is greater than the second level.

3. The method according to claim 2 wherein the first transition results from the active stylus reducing the energy storage level of the active stylus while defining the digital ink line segment (310).

4. The method according to claim 1 wherein the appearance of the digital ink line segment includes
a first digital ink line segment rendered with a first visual characteristic (500) before the first transition and
a second digital ink line segment rendered with a second visual characteristic (600) after the first transition.

5. The method according to claim 4 wherein
the determining further determines a second transition of the energy storage level of the active stylus from the second level back to the first level; and
the modifying rerenders the second digital ink line segment with the first visual characteristic (600B) in response to the second transition.

6. The method according to claim 5 wherein the modifying renders a third digital ink line segment with the first visual characteristic (700) after the second transition.

7. The method according to claim 4 wherein the first visual characteristic includes a continuous line segment and the second visual characteristic a discontinuous line segment.

8. The method according to claim 4 wherein the first visual characteristic includes a first line thickness and the second visual characteristic includes a second line thickness less than the first line thickness.

9. The method according to claim 4 wherein the first transition results from the active stylus reducing the energy storage level of the active stylus when defining the digital ink line segment and the second transition results from an increase in the energy storage level of the stylus by a reception of additional energy from an external source (304).

10. The method of claim 9 wherein the external source is a shaking action of the active stylus.

11. An apparatus comprising:
a stylus sensor (112) for determining a motion of an active stylus (200) upon the apparatus and for receiving a status signal indicative of an energy storage level of the active stylus;
a digital ink module (147) for generating a digital ink line segment in response to the motion and for associating a first visual characteristic with a first portion of the digital ink line segment (500) in response to the status signal indicating that the energy storage level of the active stylus has a first level and for associating a second visual characteristic with a second portion of the digital ink line segment (600) in response to the status signal indicating that the energy storage level of the active stylus has transitioned from the first level to a second level; and
a display (114) for rendering the first portion of the digital ink line segment with the first visual characteristic and for rendering the second portion of the digital ink line segment with the second visual characteristic.

12. The apparatus according to claim 11 wherein
the digital ink module disassociates the second visual characteristic with the second portion of the digital ink line segment and associates the first visual characteristic with the second portion of the digital ink line segment in response to the status signal indicating that the energy storage level of the active stylus has transitioned from the second level to the first level, and
the display rerenders the second portion of the digital ink line segment with the first visual characteristic.

13. A system comprising:
an active stylus (200) having
an energy storage module (202) for powering the active stylus;
a controller (204) for determining a status indicative of an energy storage level of the energy storage module;
an RF module (208) for transmitting the status signal indicative of the energy storage level of the energy storage module and for transmitting a beacon signal indicative of a location of the active stylus; and
an energy harvesting module (222) for harvesting motion energy imparted to the stylus and adding energy to the energy storage module; and
a touch-sensitive display device (100) having
a stylus sensor (112) for receiving the beacon signal and for determining a motion of the active stylus upon touch-sensitive display device in response to the beacon signal and for receiving the status signal indicative of the energy storage level of the active stylus;
a digital ink module (147) for generating a digital ink line segment in response to the motion and for associating a first visual characteristic with a first portion of the digital ink line segment in response to the status signal indicating that the energy storage level of the active stylus has a first level and for associating a second visual characteristic with a second portion of the digital ink line segment in response to the status signal indicating that the energy storage level of the active stylus has transitioned from the first level to a second level, the second level corresponding to a low energy storage level and the first level being greater than the second level; and
a display (114) for rendering the first portion of the digital ink line segment with the first visual characteristic and for rendering the second portion of the digital ink line segment with the second visual characteristic,
the digital ink module further for disassociating the second visual characteristic from the second portion of the digital ink line segment and associating the first visual characteristic with the second portion of the digital ink line segment in response to the status signal indicating that the energy storage level of the active stylus has transitioned from the second level to the first level, and
the display further for rerendering the second portion of the digital ink line segment with the first visual characteristic.

14. The system of claim 13 wherein the energy storage level of the active stylus transitions from the second level to the first level in response to a user of the active stylus shaking the active stylus.

15. The system of claim 14 wherein the energy storage module includes a battery and the energy harvesting module includes a weight coupled a piezoelectric element for converting motion energy imparted to the active stylus into electrical energy for recharging the battery.
